# EUROPEAN PATENT APPLICATION

(11) **EP 4 542 831 A1**
(43) Date of publication of application: **23.04.2025**
(21) Application number: 24188366.9
(22) Date of filing: 12.07.2024
(51) Int. Cl.: H02K 7/04, H02K 1/32, H02K 9/19

(54) **BALANCING DISC FOR MOTOR, ROTOR ASSEMBLY, MOTOR AND ELECTRIC DEVICE**

(30) Priority: 18.10.2023 CN 202311353211
(71) Applicant: Xiaomi EV Technology Co., Ltd., Beijing 100176 (CN)
(72) Inventor: YANG, Yalin, Beijing 100176 (CN)
(74) Representative: Stöckeler, Ferdinand

(57) **Abstract**

The invention relates to a balancing disc (100) for a motor, a rotor assembly (10), a motor and an electric device, the balancing disc (100) is provided with through holes (1), oil draining grooves, and a first end face and a second end face which are configured to be arranged oppositely, first end face is adapted to cooperate with an end face of a rotor iron core (200); the oil draining grooves are at the first end face and are configured to connect oil path channels in the rotor iron core (200) with an oil outlet hole of a motor rotating shaft (300). The through holes (1) are configured to be connect the first end face with the second end face and are adapted to communicate with oil path channels to introduce air into or discharge air from oil path channels.

## Description

### TECHNICAL FIELD

The invention relates to the technical field of motors, in particular, relates to a balancing disc for a motor, a rotor assembly, a motor and an electric device.

### BACKGROUND OF THE INVENTION

In the related art, for the cooling of motors, the design of oil passages on the rotor assembly of the motor is commonly adopted, and a main flow solution is to provide an oil passage on a rotating shaft of the motor, and the oil fluid is sprayed from the balancing disk to a stator winding through an oil path formed by the balancing disk and the rotor iron core, thus completing the cooling of the rotor assembly.

### SUMMARY OF THE INVENTION

An objective of the invention is to provide a balancing disc for a motor, a rotor assembly, a motor and an electric device to solve the above technical problems.

To achieve the above objective, as a first aspect of the invention, the invention provides a balancing disc for a motor, the balancing disc is provided with through holes, oil draining grooves, and a first end face and a second end face which are configured to be arranged oppositely;
the first end face is adapted to cooperate with an end face of a rotor iron core;
the oil draining grooves are arranged at the first end face and are configured to connect oil path channels in the rotor iron core with an oil outlet hole of a motor rotating shaft; and
the through holes are configured to connect the first end face with the second end face and are adapted to communicate with the oil path channels to introduce air into or discharge air from the oil path channels.

In some examples, on the balancing disc, the through holes are configured not to be communicated with the oil draining grooves.

In some examples, the through holes include first through holes; the first through holes are configured to be arranged corresponding to the oil draining grooves in a circumferential direction of the balancing disc.

In some examples, in a radial direction of the balancing disc, the first through hole is configured to be spaced apart from an outer end of the oil draining groove.

In some examples, the first through hole includes a first hole section and a second hole section which are connected;
an end of the first hole section is configured to extend to the first end face;
an end of the second hole section is configured to extend to the second end face;
where, the flow cross-sectional area of the first hole section is greater than the flow cross-sectional area of the second hole section.

In some examples, the through holes further include second through holes; and
the second through holes are configured to be spaced apart from the first through holes in the circumferential direction of the balancing disc.

In some examples, in a radial direction of the balancing disc, the distance between an outermost sidewall of the first through hole and a center line of rotation of the balancing disc is a first distance, and the distance between an innermost sidewall of the second through hole and the center line of rotation of the balancing disc is a second distance;
where, the first distance is less than or equal to the second distance.

In some examples, the number of the first through holes is plural, the number of the second through holes is plural;
the plurality of first through holes are configured to be circumferentially arranged at equal angles around the center line of rotation;
the plurality of second through holes are configured to be circumferentially arranged at equal angles around the center line of rotation; and
the first through holes and the second through holes are configured to be alternately and circumferentially arranged at equal angles around the center line of rotation.

In some examples, the second through hole is configured to has a flow cross-sectional area greater than the flow cross-sectional area of the first through hole.

In some examples, in a radial direction of the balancing disc, the distance between an outermost sidewall of the second through hole and a center line of rotation of the balancing disc is a third distance; the distance between an outermost sidewall of the oil path channel and the center line of rotation is a fourth distance;
where, the third distance is adapted to be greater than or equal to the fourth distance.

In some examples, the through holes are waist-type holes.

In some examples, the first end face is provided with an annular groove for communicating with the oil outlet hole;
the oil draining grooves are plural, and the plurality of oil draining grooves are configured to be spaced apart in the circumferential direction of the annular groove; and
the oil draining grooves configured to extend radially along the balancing disc, and radially inner ends of the oil draining grooves are configured to be communicated with the annular groove.

In some examples, the balancing disc is further provided with a mounting hole for the motor rotating shaft to pass through; and
a side of the annular groove close to the center line of rotation of the balancing disc is configured to be communicated with the mounting hole.

As a second aspect of the invention, the invention provides a rotor assembly, includes a rotor iron core, a motor rotating shaft, and two balancing discs for the motor, the balancing discs and the rotor iron core are configured to be arranged on the motor rotating shaft in a sleeving mode, and the two balancing discs are configured to be respectively disposed at both ends in the axial direction of the rotor iron core, the through holes on the two balancing discs are configured to be connected through oil path channels in the rotor iron core.

In some examples, the through holes include first through holes and second through holes, the first through holes of one of the two balancing discs being configured to be arranged corresponding to the second through holes of the other one;
where, in a radial direction of the balancing disc, the distance between an outermost sidewall of the first through hole and a center line of rotation of the balancing disc is a first distance, and the distance between an innermost sidewall of the second through hole and the center line of rotation of the balancing disc is a second distance, the first distance being less than or equal to the second distance; and
the first through holes are configured to serve as air intake holes.

In some examples, the through holes include first through holes; and the size of the first through hole in a radial direction of the balancing disk is smaller than the size of the oil path channel in a radial direction of the rotor iron core, and the first through hole is configured to be spaced apart from an inner wall of the oil path channel in the radial direction of the rotor iron core.

In some examples, in the radial direction of the rotor iron core, the distance between an outermost sidewall of the oil path channel and an outermost sidewall of the first through hole is a fifth distance, and the distance between an innermost sidewall of the oil path channel and an innermost sidewall of the first through hole is a sixth distance, where the fifth distance and the sixth distance are equal.

As a third aspect of the invention, the invention provides a motor including the rotor assembly described above.

As a fourth aspect of the invention, the invention provides an electric device including the motor described above.

When assembling the motor, two balancing disks can be assembled on the two end surfaces in the axial direction of the rotor iron core. By providing the through holes on the balancing disc, in the rotating process of the motor rotating shaft, the air can enter into the oil path channels from the through holes, while the oil path channels and an inner cavity of the motor rotating shaft are connected through the oil draining grooves, in this manner, the air pressure of the inner cavity of the motor rotating shaft is also replenished through the through holes, and the pressure difference between the inner cavity of the motor rotating shaft and other oil structures of the motor is reduced to avoid the vacuum effect, thus reducing the amount of oil fluid (cooling oil) drawn by the inner cavity of the motor rotating shaft from other oil structures through the oil path channels, and facilitating the proper operation of the motor.

In addition, two cavities of the motor located at both ends in the axial direction of the rotor iron core can be connected through the through holes on the balancing discs on the two end faces in the axial direction of the rotor iron core and the oil path channels that communicate with the through holes, so as to balance the air pressure between the two cavities and reduce the influence of the air pressure difference on the oil level.

Further, the air passes through the rotor iron core by the two through holes and the oil path channel connected to the through holes to remove heat from the rotor iron core, which can provide additional air cooling to the rotor iron core, thus being conductive to improving the cooling effect.

Other features and advantages of the invention will be described in detail in the detailed description that follows.

### BRIEF DESCRIPTION OF DRAWINGS

The accompanying drawings are included to provide a further understanding of the invention and constitute a part of the specification, and together with the detailed description below serve to explain the invention, but do not constitute a limitation of the invention. In the drawings:
FIG. 1 is a schematic perspective view of a rotor assembly according to an example of the invention;
FIG. 2 is a schematic side view of a rotor assembly according to an example of the invention;
FIG. 3 is a schematic front view of a rotor assembly according to an example of the invention;
FIG. 4 is a schematic axial cross-sectional view of a rotor assembly according to an example of the invention;
FIG. 5 is an enlarged schematic view of a portion A in FIG. 4;
FIG. 6 is a schematic perspective view of a balancing disc according to an example of the invention;
FIG. 7 is a schematic perspective view of a balancing disc according to an example of the invention, where an annular groove is shown;
FIG. 8 is a schematic front view of a balancing disc according to an example of the invention;
FIG. 9 is a schematic cross-sectional view along a direction B-B in FIG. 7;
FIG. 10 is a schematic perspective view of a motor rotating shaft according to an example of the invention;
FIG. 11 is a schematic perspective view of a rotor iron core according to an example of the invention;
FIG. 12 is a schematic block diagram of a motor according to an example of the invention;
FIG. 13 is a schematic block diagram of an electric device according to an example of the invention.

### DETAILED DESCRIPTION OF THE INVENTION

Specific embodiments of the invention are described in detail below with reference to the accompanying drawings. It should be understood that the specific embodiments described here are only used to illustrate and explain the invention, and are not used to limit the invention.

In the disclosure, the positional words used such as "up" and "down" are generally defined based on the surface direction of the corresponding accompanying drawings, unless otherwise indicated. "Inner" and "outer" refer to the inner and outer of the profile of the corresponding component. Moreover, the terms "first", "second", and the like are used only to distinguish descriptions and cannot be understood as indicating or implying relative order or importance.

In the related art, since the motor rotating shaft rotates at high speed, the oil fluid is flung out of the inner cavity of the motor rotating shaft and a vacuum is created in the inner cavity of the motor rotating shaft, resulting in a pressure difference between the inner cavity of the motor rotating shaft and other oil structures (i.e. structures using oil) and creating a vacuum effect. More oil fluid is drawn into the inner cavity of the motor rotating shaft due to the pressure difference, resulting in an insufficient amount of oil in other oil structures and affecting the proper operation of the motor.

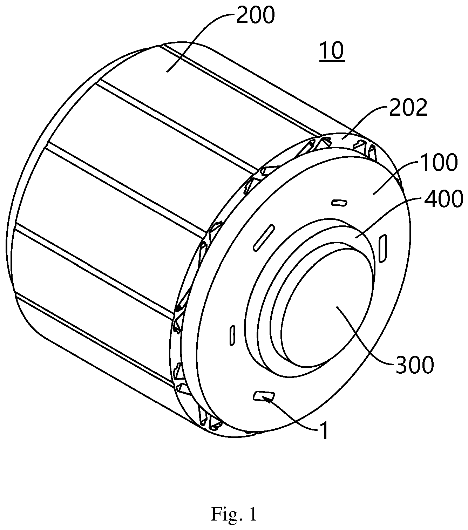

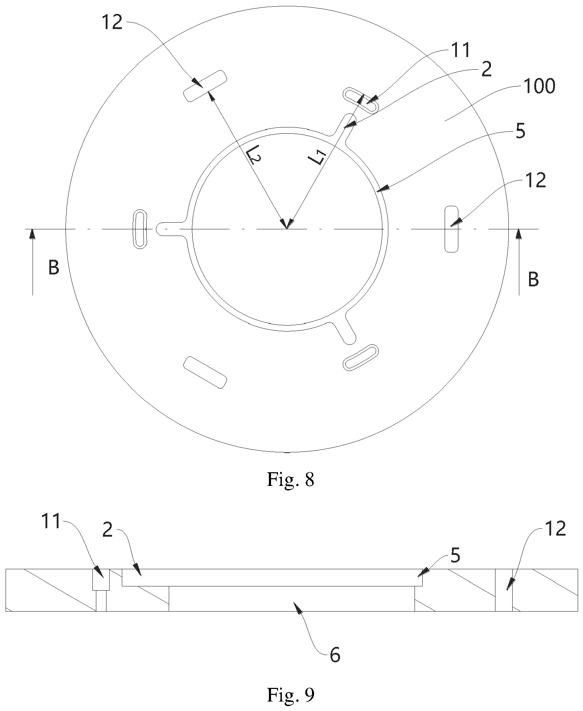

In view of this, as a first aspect of the invention, as shown in FIGS. 1 to 9, the invention provides a balancing disc 100 for a motor, the balancing disc 100 is provided with through holes 1, oil draining grooves 2, and a first end face 3 and a second end face 4 which are configured to be arranged oppositely. The first end face 3 is adapted to cooperate with an end face 202 of a rotor iron core 200, i.e., the first end face 3 can cooperate (e.g., fit) with the end face 202 of the rotor iron core 200 when installed; the oil draining grooves 2 are arranged at the first end face 3 and are configured to connect oil path channels 201 in the rotor iron core 200 with an oil outlet hole 302 of a motor rotating shaft 300. The through holes 1 are configured to connect the first end face 3 with the second end face 4 and are adapted to communicate with the oil path channels 201 to introduce air into or discharge air from the oil path channels 201.

When assembling the motor 500, two balancing disks 100 can be assembled on the two end surfaces in the axial direction of the rotor iron core 200. By providing the through holes 1 on the balancing disc 100, in the rotating process of the motor rotating shaft 300, the air can enter into the oil path channels 201 from the through holes 1, while the oil path channels 201 and an inner cavity of the motor rotating shaft 300 are connected through the oil draining grooves 2, in this manner, the air pressure of the inner cavity of the motor rotating shaft 300 is also replenished through the through holes 1, and the pressure difference between the inner cavity of the motor rotating shaft 300 and other oil structures of the motor is reduced to avoid the vacuum effect, thus reducing the amount of oil fluid (cooling oil) drawn by the inner cavity of the motor rotating shaft 300 from other oil structures (i.e. structures using oil) through the oil path channel, and facilitating the proper operation of the motor.

In addition, two chambers of the motor located at both ends in the axial direction of the rotor iron core 200 can be connected through the through holes 1 on the balancing discs 100 on the two end faces in the axial direction of the rotor iron core 200 and the oil path channels 201 that communicate with the through holes 1, so as to balance the air pressure between the two chambers and reduce the influence of the air pressure difference on the oil level, which can be discussed below.

Further, the air passes through the rotor iron core 200 by the two through holes 1 and the oil path channel 201 connected to the through holes 1 to remove heat from the rotor iron core 200, which can provide additional air cooling to the rotor iron core 200, thus being conductive to improving the cooling effect.

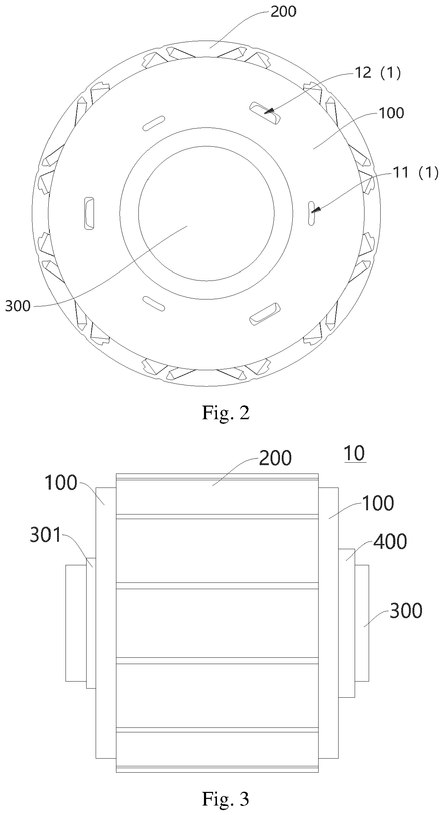

The invention does not limit the cross-sectional shape of the through hole 1, the cross-sectional shape of the through hole 1 may be circular, square and triangular, etc., in one implementation provided by the invention, as shown in FIG. 2, the through hole 1 can be a waist-shaped hole, so that, in an example where the cross-sectional shape of the oil path channel 201 is trapezoidal, the through hole 1 is set as a waist-shaped hole to fit the cross-sectional shape of the oil path channel 201, the coincident area of the through hole 1 and the oil path channel 201 can be increased, thus raising the air passing amount.

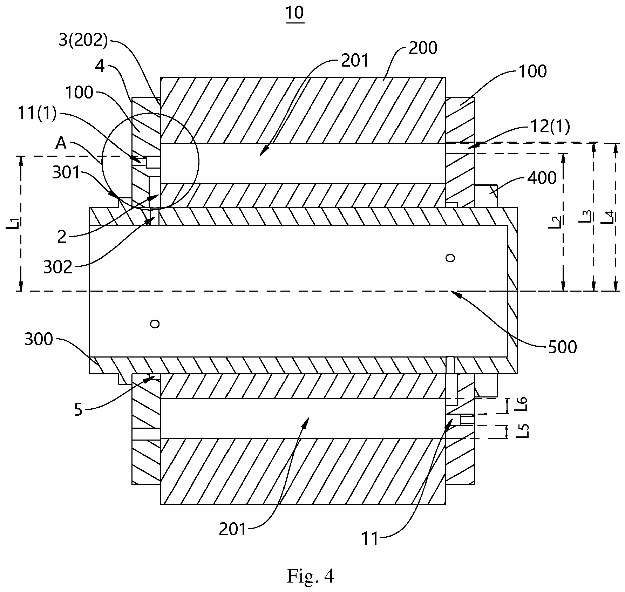

In order to guarantee the air passing efficiency of the through hole 1, in some examples, as shown in FIG. 4, on the balancing disc 100, the through holes 1 are configured not to be communicated with the oil draining groove 2. Since the main purpose of providing the through hole 1 is to introduce air into or discharge air from the oil path channel 201, the air and oil fluid coexist in the oil path channel 201, the through hole 1 and the oil draining groove 2 both communicate with the oil path channel 201, if the through hole 1 communicates with the oil draining groove 2 on the balancing disc 100, there may be a case where the oil fluid in the oil draining groove 2 is drained through the through hole 1 for air intake, while in this case, the oil fluid in the through hole 1 may hinder smooth entry and exit of air, thus affecting the amount of air entering the oil path channel 201; also, the amount of oil fluid in the oil path channel 201 is reduced, thus reducing the cooling effect of the rotor iron core 200.

The through hole 1 and the oil draining groove 2 may have any suitable arrangement relationship, as shown in FIGS. 2 and 4, and in one example of the invention, the through holes 1 include first through holes 11 be configured to be disposed corresponding to the oil draining grooves 2 in a circumferential direction of the balancing disc 100. While the first through hole 11 and the oil draining groove 2 are both in communication with the oil path channel 201, however, there may be a plurality of mutually independent oil path channels 201 in the rotor iron core 200 of the motor, while the first through hole 11 and the oil draining groove 2 are disposed corresponding to each other, it is advantageous that the oil draining groove 2 and the first through hole 11 can communicate with the same oil path channel 201, so that the air can be supplemented into the oil path channel 201 via the first through hole 11, while the air pressure of the inner cavity of the motor rotating shaft 300 communicating with the same oil path channel 201 is supplemented through the oil draining groove 2, thus reducing the amount of oil suction for other oil structures.

In some examples, as shown in FIG. 4, in a radial direction of the balancing disc 100, the first through hole 11 is configured to be spaced apart from an outer end of the oil draining groove 2. For example, in the example in which the first through hole 11 and the oil drain groove 2 are disposed corresponding to each other in the circumferential direction of the balancing disc 100, the first through hole 11 may be spaced apart from the outer end of the oil draining groove 2, so that, as mentioned above, the first through hole 11 may be disconnected from the oil draining groove 2, thus ensuring normal oil draining of the oil draining groove 2 and normal air intake of the first through hole 11, preventing the first through hole 11 and the oil draining groove 2 from interfering with each other, and ensuring normal operation of the motor.

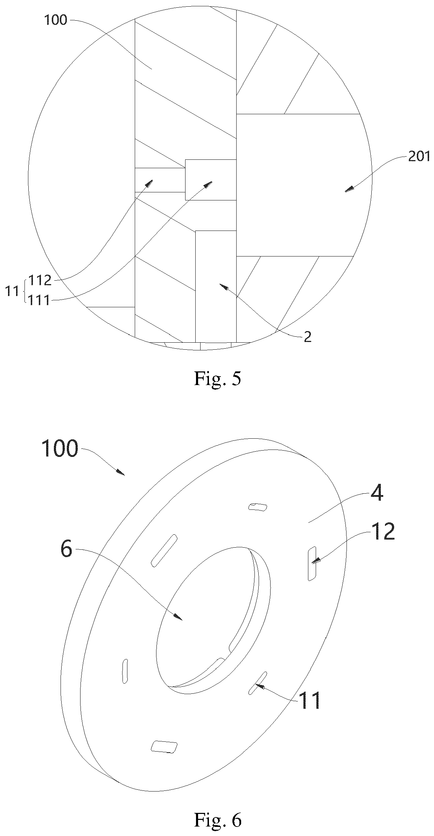

In order to increase the air flow velocity in the first through hole 11, in some examples, as shown in FIG. 5, the first through hole 11 includes a first hole section 111 and a second hole section 112 connected, one end of the first hole section 111 (the end remote from the second hole section 112) is configured to extend to the first end face 3, and one end of the second hole section 112 (the end remote from the first hole section 111) is configured to extend to the second end face 4. The flow cross-sectional area of the first hole section 111 is greater than the flow cross-sectional area of the second hole section 112. Since the first through hole 11 needs to transfer the air from the second end face 4 to the first end face 3, the air enters the oil path channel 201 after flowing from the second hole section 112 to the first hole section 111 in the first through hole 11. Depending on the nature of the fluid, the smaller the flow cross-sectional area, the faster the fluid flow rate in the passage, the flow cross-sectional area of the first hole section 111 is set to be larger than the flow cross-sectional area of the second hole section 112, the air flow velocity in the second hole section 112 is greater than the first hole section 111, an air pressure difference is formed between the second hole section 112 and the first hole section 111, thus pushing more air into the second hole section 112, raising the air intake amount per unit time of the first through hole 11, and further reducing the influence of the vacuum caused by the rotation of the motor rotating shaft 300 on other oil structures.

In addition, the amount of air entering the first through hole 11 is increased by providing the first hole section 111 and the second hole section 112 having different flow cross-sectional areas, so that more air flows through the rotor iron core 200 per unit time, more heat is removed, and the cooling effect is improved.

It should be noted that the cross-sectional shape of the first and second hole sections 111 and 112 at any position may be a regular hole, for example, a circular hole or a square hole, or may be an irregular hole (i.e., a shaped hole), such as a hole formed by a combination of a semicircle and a triangle, and the like, and the invention is not limited to this.

The flow cross-sectional area of the first hole section 111 being larger than the flow cross-sectional area of the second hole section 112 means that on the flow path of the air in the first through hole 11, there is at least one flow cross-section of the plurality of flow cross-sections of the first hole section 111 having a cross-sectional area larger than the largest cross-sectional area of the plurality of flow cross-sections of the second hole section 112. For example, the flow cross-sectional area at any position of the first hole section 111 is greater than the flow cross-sectional area of the second hole section 112, or among the plurality of flow cross-sectional areas of the first hole section 111, there is a flow cross-sectional area larger than the maximum flow cross-sectional area of the second hole section 112.

In some examples, as shown in FIG. 2, the through holes 1 further include second through holes 12 configured to be spaced apart from the first through holes 11 in the circumferential direction of the balancing disc 100. The second through holes 12 are spaced apart from the first through holes 11 in the circumferential direction of the balancing disc 100, when two balancing discs 100 are respectively mounted on both ends of the rotor iron core 200, one of the balancing discs 100 is rotated so that the second through hole 12 of the balancing disc 100 corresponds to the first through hole 11 of the other balancing disc 100, and both the first through hole 11 and the second through hole 12 communicate with the same oil path channel 201, which facilitates the installation of the balancing disc 100.

Also, the balancing disc 100 is provided with the first through holes 11 and the second through holes 12 for air circulation, so that the air passing amount of the balancing disc 100 can be increased, thus increasing the amount of intake air of the oil path channel 201, which is beneficial to suppressing the vacuum effect described above to ensure the normal operation of the motor.

In the related art, during rotation of the motor, due to the relatively small air gap between the rotor assembly and the stator assembly, air flow between the chambers of the motor at both ends of the rotor iron core in the axial direction of the motor rotating shaft is poor during rotation of the rotor, and an air pressure difference may occur.

After the oil fluid between the two chambers communicates through a communication pipe, it merges into the oil path together to form circulating use of the oil fluid. The air pressure difference between the two chambers may cause the oil fluid in the less pressurized chamber to be unable to enter the oil path due to the pressure difference and continue to accumulate. After the oil fluid overflows the rotor iron core, the resistance of the rotor iron core is further increased when the rotor iron core rotates, which is not conducive to the normal operation of the motor.

In view of this, In this invention, while communicating with the oil path channel 201 through the first through hole 11 and the second through hole 12 on the two balancing discs 100, the chambers at both ends of the rotor iron core 200 are connected so that the chambers at both ends of the rotor iron core 200 in the axial direction of the motor rotating shaft 300 can exchange air through the channel, thus equalizing the pressure difference between the two chambers, and making the air pressure between the two chambers close to ensure the normal circulation flow of the oil fluid.

While in order to improve the circulation efficiency of the oil path channel 201, in some examples, as shown in FIG. 4, in a radial direction of the balancing disc 100, the distance between an outermost sidewall of the first through hole 11 and a center line of rotation 500 (the central axis) of the balancing disc 100 is a first distance L1, the distance between an innermost sidewall of the second through hole 12 and the center line of rotation 500 of the balancing disc 100 is a second distance L2, and the first distance L1 is less than or equal to the second distance L2.

When the rotor iron core 200 is rotated, the oil fluid and air will move away from the center line of rotation 500 due to the centrifugal force generated by the rotation. The outermost sidewall of the first through hole 11 is arranged to be closer to the center line of rotation 500 of the balancing disk 100 than the innermost sidewall of the second through hole 12, so that the first through hole 11 is closer to the center line of rotation 500 than the second through hole 12, and the air entering from the first through hole 11 will be discharged from the second through hole 12 farther away from the center line of rotation 500 due to the centrifugal force.

Also, the oil fluid in the oil path channel 201 flows out through the second through hole 12 farther from the center line of rotation 500 due to centrifugal force to form a unidirectional flow direction of the fluid in the oil path channel 201, thus reducing flow resistance due to different flow directions, and improving the flow rate and flow efficiency of the fluid in the oil path channel 201.

It should be noted that the above-mentioned "inner" and "outer" may be defined by the position of the corresponding structures in relation to the center line of rotation 500 of the balancing disc 100, "inner" indicates being closer to the center line of rotation 500 and "outer" indicates being further away from the center line of rotation 500.

In order to enhance the air passing effect, in some examples, as shown in FIG. 6, the number of the first through holes 11 is plural, the number of the second through holes 12 is plural, the plurality of first through holes 11 are configured to be circumferentially arranged at equal angles around the center line of rotation 500, the plurality of second through holes 12 are configured to be circumferentially arranged at equal angles around the center line of rotation 500, and the first through holes 11 and the second through holes 12 are configured to be alternately and circumferentially arranged at equal angles around the center line of rotation 500.

Since the oil path channels 201 on the rotor iron core 200 are plural, each of which may be provided with the corresponding first and second through holes 11 and 12, the passing efficiency of air and oil fluid can be improved, increasing the cooling effect.

The first through holes 11 and the second through holes 12 on the balancing disc 100 are alternately and circumferentially arranged at equal angles around the center line of rotation 500, and it is also advantageous that the overall weight of the balancing disc 100 is uniform, so that the balancing disc 100 can perform a better balancing function.

In order to further lift the flow velocity of the air inside the oil path channel 201, in some examples, the flow cross-sectional area of the second through hole 12 is larger than the flow cross-sectional area of the first through hole 11. Since the air enters the oil path channel 201 through the first through hole 11, and is discharged through the second through hole 12, the flow cross-sectional area of the second through hole 12 is set to be larger than the flow cross-sectional area of the first through hole 11, so that the air inside the oil path channel 201 is more easily discharged through the second through hole 12 to further increase the amount of the air passing through the second through hole 12, thus improving the air passing efficiency.

While in order to reduce the obstruction of the second through hole 12 to the oil fluid, in some examples, as shown in FIG. 4, in a radial direction of the balancing disc 100, the distance between an outermost sidewall of the second through hole 12 and a center line of rotation 500 of the balancing disc 100 is a third distance L3, and the distance between an outermost sidewall of the oil path channel 201 and the center line of rotation 500 of the balancing disc 100 is a fourth distance L4, where the third distance L3 is adapted to be greater than or equal to the fourth distance L4.

Since the second through hole 12 is provided at a position farther from the center line of rotation 500 of the balancing disc 100 than the oil path channel 201, in order to enable the second through hole 12 to communicate with the oil path channel 201 under this condition, an outermost sidewall of the second through hole 12 may be disposed further from the center line of rotation 500 of the balancing disc 100 than an outermost sidewall of the oil path channel 201, so that the oil fluid flowing along the outermost sidewall of the oil path channel 201 due to the centrifugal force action can flow out through the second through hole 12, thus preventing the first end face 3 of the balancing disk 100 from blocking the oil fluid because the outermost sidewall of the second through hole 12 is lower than the outermost sidewall of the oil path channel 201, and improving the oil passing efficiency of the second through hole 12.

It should be noted that the above-mentioned "inner" and "outer" may be defined by the position of the corresponding structures in relation to the center line of rotation 500 of the balancing disc 100, "inner" indicates being closer to the center line of rotation 500 and "outer" indicates being further away from the center line of rotation 500.

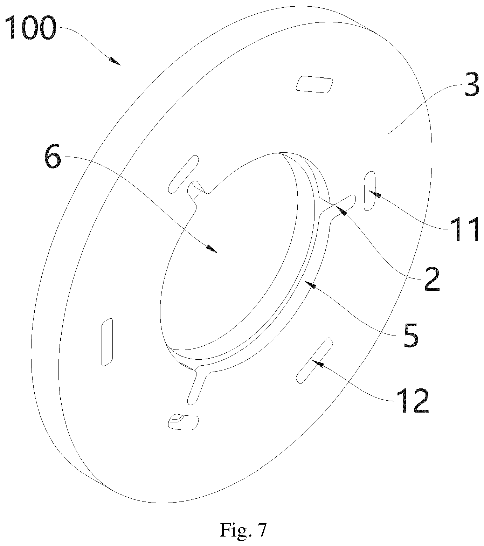

In order to reduce the assembly difficulty of the balancing disc 100, in some examples, as shown in FIG. 7, the first end face 3 is provided with an annular groove 5 for communicating with the oil outlet hole 302, there are a plurality of oil drainage grooves 2, which are configured to be arranged circumferentially and spaced apart around the annular groove 5, the oil draining grooves 2 are configured to extend radially along the balancing disc 100, and the inner ends of the oil draining grooves 2 located in the radial direction are configured to be communicated with the annular groove 5.

Since the motor rotating shaft 300 discharges the oil fluid inside the motor rotating shaft 300 through the oil outlet hole 302, the drained oil fluid enters the oil path channel 201 inside the rotor iron core 200 through the oil draining groove 2 provided in the radial direction of the balancing disc 100, an annular groove 5 communicating with the oil outlet hole 302 is provided on the balancing disc 100, and the inner end of the oil draining groove 2 in the radial direction communicates with the annular groove 5, so that the oil fluid flowing from the oil outlet hole 302 can enter the annular groove 5 first, and then flow into the oil draining groove 2 in the radial direction by centrifugal force.

The arrangement is such that the annular groove 5 covers the oil outlet hole 302 of the motor rotating shaft 300 during mounting of the balancing disc 100 without strictly aligning the oil draining groove 2 with the oil outlet hole 302, thus reducing the mounting difficulty of the balancing disc 100. Also, the plurality of oil draining grooves 2 arranged circumferentially and spaced apart around the annular groove 5 can communicate with a plurality of oil path channels 201, respectively, and evenly divide the oil fluid to each of the oil draining grooves 2 during rotation, so that the oil fluid can be more evenly distributed into the rotor iron core 200, thus ensuring uniformity of cooling of the rotor iron core 200 and uniformity of a counterweight.

In some examples, as shown in FIG. 7, the balancing disc 100 is further provided with a first mounting hole 6 for the motor rotating shaft 300 to pass through, and a side (i.e., an inner side) of the annular groove 5 close to a center line of rotation 500 of the balancing disc 100 is configured to be communicated with the first mounting hole 6. That is, a stepped hole is formed on the first end surface 3 around the first mounting hole 6, the stepped hole is configured as an annular groove 5, and by connecting the inner side of the annular groove 5 with the first mounting hole 6, it is also ensured that the oil fluid discharged from the oil outlet hole 302 of the motor rotating shaft 300 can directly enter into the annular groove 5 after the motor rotating shaft 300 is mounted in the first mounting hole 6, so as to reduce leakage of the oil fluid during rotation.

According to a second aspect provided by the invention, as shown in FIGS. 1-4, 10 and 11, the invention provides a rotor assembly 10, including a rotor iron core 200, a motor rotating shaft 300 and two balancing discs 100 for the motor mentioned above, the balancing discs 100 and the rotor iron core 200 are both configured to be arranged on the motor rotating shaft 300 in a sleeving mode, and the two balancing discs 100 are configured to be respectively disposed at both ends of the rotor iron core 200 in the axial direction, through holes 1 on the two balancing discs 100 communicate with each other through an oil path channel 201 in the iron core 200.

In order to further reduce interference of the air path and the oil path, in some examples, as shown in FIG. 4, the through holes 1 include first through holes 11, a size of the first through hole 11 in a radial direction of the balancing disk 100 is smaller than a size of the oil path channel 201 in a radial direction of the rotor iron core 200, and the first through hole 11 is spaced apart from an inner wall of the oil path channel 201.

Since the size of the first through hole 11 in the radial direction of the balancing disc 100 is smaller than the size of the oil path channel 201 in the radial direction of the rotor iron core 200, and the first through hole 11 is spaced apart from an inner wall of the oil path channel 201, at this time, the flow cross-sectional area of the first through hole 11 is smaller than the flow cross-sectional area of the oil path channel 201, and a stepped structure may be formed between the first through hole 11 and the oil path channel 201, by such arrangement, in the radial direction of the balancing disc 100, a distance (the fourth distance L4 as mentioned above) between the outermost sidewall of the oil path channel 201 and the center line of rotation 500 of the balancing disc 100 may be greater than a distance (the first distance L1 as mentioned above) between the outermost sidewall of the first through hole 11 and the center line of rotation 500 of the balancing disc 100, a distance between an innermost sidewall of the oil path channel 201 and a center line of rotation 500 of the balancing disc 100 may be smaller than a distance between an innermost sidewall of the first through hole 11 and the center line of rotation 500 of the balancing disc 100, so that a stepped structure is provided between an outermost sidewall of the first through hole 11 and an outermost sidewall of the oil path channel 201, a stepped structure is provided between the innermost sidewall of the first through hole 11 and the innermost sidewall of the oil path channel 201, so that the oil fluid within the oil path channel 201 does not easily flow out through the first through hole 11, thus ensuring that the first through hole 11 is mainly for the passage of air, thus reducing mutual influence between the air and the oil fluid.

In some examples, as shown in FIG. 4, a distance between an outermost sidewall of the oil path channel 201 and an outermost sidewall of the first through hole 11 is a fifth distance, and a distance between an innermost sidewall of the oil path channel 201 and an innermost sidewall of the first through hole 11 is a sixth distance, where the fifth distance and the sixth distance are equal. That is, in the radial direction of the rotor iron core 200 or the balancing disc 100, the first through hole 11 is located at the center of the oil path channel 201, so that the air entering the oil path channel 201 from the first through hole 11 can be more uniformly diffused in the oil path channel 201, in addition to further avoiding that the oil fluid in the oil path channel 201 can flow out through the first through hole 11, which is beneficial to making the air pressure in the oil path channel 201 more uniform.

In some examples, as shown in FIGS. 1, 3 and 4, the rotor assembly 10 further includes a pressing ring 400, an outer surface of the motor rotating shaft 300 is formed with a protrusion 301 in a radial direction, an upper end surface of the protrusion 301 is at a distance from the outer surface of the motor rotating shaft 300 greater than a gap between the balancing disc 100 and the motor rotating shaft 300 to stop the balancing disc 100 at a position where the protrusion 301 is located to limit movement of the balancing disc 100 in an axial direction of the motor rotating shaft 300. Also, in the mounting process of the balancing disc 100, it is possible to simplify the mounting step by pushing the balancing disc 100 to the position where the projection 301 is located. The pressing ring 400 may be disposed on the outer side of the other balancing disc 100 in the axial direction of the motor rotating shaft 300 away from the protrusion 301 to limit the two balancing discs 100 and the rotor iron core 200 within a preset range.

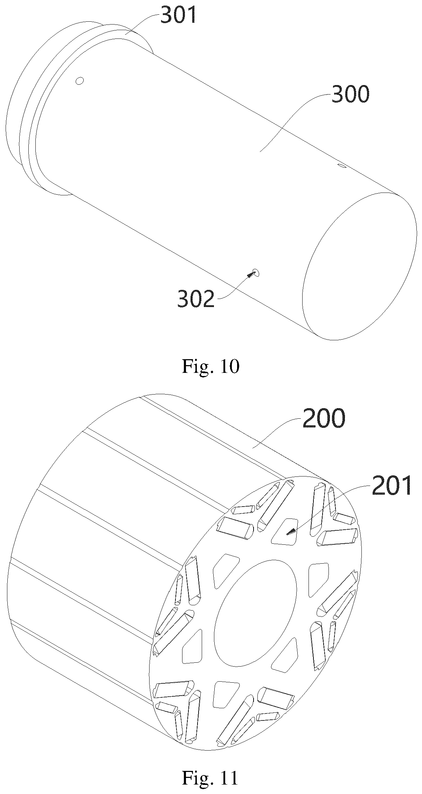

In some examples, as shown in FIG. 10, the projection 301 may be an annular projection disposed in the circumferential direction of the motor rotating shaft 300 to make the force applied in the axial direction of the motor rotating shaft 300 more distributed and uniform.

In some examples, a second mounting hole is provided on the rotor iron core 200, and the motor rotating shaft 300 is arranged in the second mounting hole in a penetrating mode.

As described above, in some examples, as shown in FIG. 4, the through holes 1 include first through holes 11 and second through holes 12, and the first through hole 11 of one of the two balancing discs 100 is disposed corresponding to the second through hole 12 of the other. The first through hole 11 can be used as an air intake hole. The air can enter the oil path channel 201 from the first through hole 11 and be discharged from the second through hole 12, and the first distance L1 is smaller than the second distance L2 so that the air entering from the first through hole 11 can be discharged from the second through hole 12 due to centrifugal force, thus forming a unidirectional flow path, which is conducive to reducing the resistance of the air to circulate and improving the passing efficiency of the air.

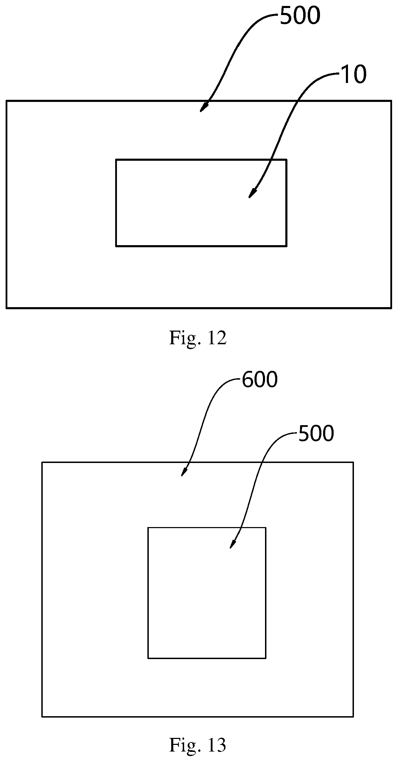

As a third aspect of the invention, as shown in FIG. 12, the invention provides a motor 500 including the rotor assembly 10 described above.

As a fourth aspect of the invention, as shown in FIG. 13, the invention provides an electric device 600 including the motor 500 described above. The electric device 600 may include vehicles and other electric devices suitable for using motors, such as ships, electric toys, electric tools, and the like. Vehicles can be fuel vehicles, air vehicles or new energy vehicles, and new energy vehicles can be pure electric vehicles, hybrid vehicles or extended-range vehicles, etc.: electric toys include fixed or mobile electric toys, such as game consoles, electric vehicles toys, electric ship toys and electric aircraft toys, etc.: electric tools include metal cutting electric tools, grinding electric tools, assembly electric tools and railway electric tools, such as electric drills, electric grinders, electric wrenches, electric screwdrivers, electric hammers, impact electric drills, concrete vibrators and electric planers, etc. Examples of the present application do not impose special restrictions on the above-mentioned electric device 600.

Preferred examples of the invention are described in detail above in conjunction with the accompanying drawings, however, the invention is not limited to the specific details in the above examples, within the scope of the technical idea of the invention, many simple variations can be made to the technical solutions of the invention, which all belong to the protection scope of the invention.

It is further noted that the various specific features described in the above detailed description can be combined in any suitable manner, insofar as they are not inconsistent. In order to avoid unnecessary repetition, the invention is not further described with respect to the various possible combinations.

In addition, any combination may be made between various examples of the invention, as long as it does not depart from the idea of the invention, which should also be regarded as disclosed by the invention.

## Claims

1. A balancing disc for a motor, wherein the balancing disc (100) is provided with through holes (1), oil draining grooves (2), and a first end face (3) and a second end face (4) which are configured to be arranged oppositely;
wherein the first end face (3) is adapted to cooperate with an end face (202) of a rotor iron core (200);
wherein the oil draining grooves (2) are at the first end face (3) and are configured to connect oil path channels (201) in the rotor iron core (200) with an oil outlet hole (302) of a motor rotating shaft (300); and
wherein the through holes (1) are configured to connect the first end face (3) with the second end face (4) and are adapted to communicate with the oil path channels (201) to introduce air into or discharge air from the oil path channels (201).

2. The balancing disc for a motor according to claim 1, wherein, on the balancing disc (100), the through holes (1) are configured not to be communicated with the oil draining grooves (2).

3. The balancing disc for a motor according to claim 1 or 2, wherein the through holes (1) comprise first through holes (11);
wherein the first through holes (11) are configured to be arranged corresponding to the oil draining grooves (2) in a circumferential direction of the balancing disc (100); and
wherein, optionally, in a radial direction of the balancing disc (100), the first through hole (11) is configured to be spaced apart from an outer end of the oil draining groove (2).

4. The balancing disc for a motor according to claim 3, wherein the first through hole (11) comprises a first hole section (111) and a second hole section (112) which are connected;
wherein an end of the first hole section (111) is configured to extend to the first end face (3);
wherein an end of the second hole section (112) is configured to extend to the second end face (4); and
wherein the flow cross-sectional area of the first hole section (111) is greater than the flow cross-sectional area of the second hole section (112).

5. The balancing disc for a motor according to claim 3 or 4, wherein the through holes (11) further comprise second through holes (12); and
wherein the second through holes (12) are configured to be spaced apart from the first through holes (11) in the circumferential direction of the balancing disc (100).

6. The balancing disc for a motor according to claim 5, wherein, in a radial direction of the balancing disc (100), the distance between an outermost sidewall of the first through hole (11) and a center line of rotation (500) of the balancing disc (100) is a first distance (L₁), and the distance between an innermost sidewall of the second through hole (12) and the center line of rotation (500) of the balancing disc (100) is a second distance (L₂); and
wherein the first distance (L₁) is less than or equal to the second distance (L₂).

7. The balancing disc for a motor according to claim 6, wherein the number of the first through holes (11) is plural, and the number of the second through holes (12) is plural;
wherein the plurality of first through holes (11) are configured to be circumferentially arranged at equal angles around the center line of rotation (500);
wherein the plurality of second through holes (12) are configured to be circumferentially arranged at equal angles around the center line of rotation (500); and
wherein the first through holes (11) and the second through holes (12) are configured to be alternately and circumferentially arranged at equal angles around the center line of rotation (500).

8. The balancing disc for a motor according to any one of claims 5-7, wherein the second through hole (12) is configured to has a flow cross-sectional area greater than the flow cross-sectional flow of the first through hole (11).

9. The balancing disc for a motor according to any one of claims 5-8, wherein, in a radial direction of the balancing disc (100), the distance between an outermost sidewall of the second through hole (12) and a center line of rotation (500) of the balancing disc (100) is a third distance (L₃), and the distance between an outermost sidewall of the oil path channel (201) and the center line of rotation (500) is a fourth distance (L₄); and
wherein the third distance (L₃) is adapted to be greater than or equal to the fourth distance (L₄).

10. The balancing disc for a motor according to any one of claims 1-9, wherein the first end face (3) is provided with an annular groove (5) for communicating with the oil outlet hole (302), the oil draining grooves (2) are plural, and the plurality of oil draining grooves (2) are configured to be spaced apart in the circumferential direction of the annular groove (5);
wherein the oil draining grooves (2) are configured to extend radially along the balancing disc (100), and radially inner ends of the oil draining grooves (2) are configured to be communicated with the annular groove (5);
wherein, optionally, the balancing disc (100) is further provided with a mounting hole (6) for the motor rotating shaft (300) to pass through, and a side of the annular groove (5) close to the center line of rotation (500) of the balancing disc (100) is configured to communicated with the mounting hole (6).

11. A rotor assembly, comprising a rotor iron core (200), a motor rotating shaft (300) and two balancing discs (100) for a motor (500) according to any one of claims 1 to 10, wherein both of the balancing discs (100) and the rotor iron core (200) are configured to be arranged on the motor rotating shaft (300) in a sleeving mode, and the two balancing discs (100) are configured to be respectively disposed at both ends in the axial direction of the rotor iron core (200), wherein the through holes (1) on the two balancing discs (100) are configured to be connected through oil path channels (201) in the rotor iron core (200).

12. The rotor assembly according to claim 11, wherein the through holes (1) comprise first through holes (11) and second through holes (12), the first through holes (11) of one of the two balancing discs (100) being configured to be arranged corresponding to the second through holes (12) of the other one;
wherein, in a radial direction of the balancing disc (100), the distance between an outermost sidewall of the first through hole (11) and a center line of rotation (500) of the balancing disc (100) is a first distance (L₁), and the distance between an innermost sidewall of the second through hole (12) and the center line of rotation (500) of the balancing disc (100) is a second distance (L₂), the first distance (L₁) being less than or equal to the second distance (L2); and
wherein the first through holes (1) are configured to serve as air intake holes.

13. The rotor assembly according to claim 11 or 12, wherein the through holes (1) comprise first through holes (11), the size of the first through hole (11) in a radial direction of the balancing disk (100) is smaller than the size of the oil path channel (201) in a radial direction of the rotor iron core (200), and the first through hole (11) is configured to be spaced apart from an inner wall of the oil path channel (201) in the radial direction of the rotor iron core (200),
wherein, optionally, in the radial direction of the rotor iron core (200), the distance between an outermost sidewall of the oil path channel (201) and an outermost sidewall of the first through hole (11) is a fifth distance (L₅), and the distance between an innermost sidewall of the oil path channel (201) and an innermost sidewall of the first through hole (11) is a sixth distance (L₆), wherein the fifth distance (L₅) and the sixth distance (L₆) are equal.

14. A motor comprising the rotor assembly (100) according to any one of claims 11 to 13.

15. An electric device, comprising the motor (500) according to claim 14.
